# EUROPEAN PATENT SPECIFICATION

(11) **EP 1 955 504 B1**
(45) Date of publication and mention of the grant of the patent: **07.09.2016**
(21) Application number: 06849905.2
(22) Date of filing: 28.11.2006
(51) Int. Cl.: H04L 12/58

(54) **ANTI-SPAM APPLICATION STORAGE SYSTEM**
SPEICHERSYSTEM MIT ANTISPAMPROGRAMM
SYSTEME DE STOCKAGE COMPRENANT UNE APPLICATION ANTI-MESSAGES POUBELLE

(30) Priority: 28.11.2005 US 288018
(43) Date of publication of application: 13.08.2008
(73) Proprietor: ALCATEL LUCENT, 92100 Boulogne-Billancourt (FR)
(72) Inventor: MCGREAL, Donna, L., Chicago, IL 60645 (US); CAI, Yigang, Naperville, IL 60564 (US)
(74) Representative: Berthier, Karine
(86) International application number: PCT/US2006/045608
(87) International publication number: WO 2007/087006

(56) References cited:
- EP-A- 1 564 670
- WO-A-99/67731
- GB-A- 2 397 139

## Description

### Technical Field

This invention relates to arrangements for long term storage of short message system (SMS) messages.

### Background of the Invention

With the advent of the Internet, it has become easy to send messages to a large number of destinations at little or no cost to the sender. The same is true of short message service (SMS). These messages include unsolicited and unwanted messages (spam) which are a nuisance to the receiver of the message who has to clear the message and determine whether it is of importance. Further, it is a nuisance to the carrier of the telecommunications network used for transmitting the message, not only because it presents a customer relations problem with respect to irate customers who are flooded with spam, but also because these messages, for which there is usually little or no revenue, use network resources. An illustration of the seriousness of this problem is given by the following two statistics. In China in 2003, two trillion short message service (SMS) messages were sent over the Chinese telecommunications network; of these messages, an estimated three quarters were spam messages. The second statistic is that in the United States an estimated 85-90% of e-mail messages are spam.

These spam messages are not merely a nuisance, but are in many instances a means for defrauding the recipients of the message by making it apparently attractive for them to provide their credit card information or by urging them to send in a modest amount of money (for "processing expenses" or "taxes") in the expectation of receiving a very much larger amount. Messages, automatically originated by a computer, for defrauding are frequently sent to a very large number of destinations in the hope that at least some of these destinations will be foolish enough to respond. The problem is serious in the United States but is actually acute in China, Japan, Korea, and, to a lesser extent, in Europe. These latter countries typically have an enormous volume of SMS messages.

In order to identify and prosecute such fraudulent use of telecommunications services, it is desirable to be able to record the messages which are used for perpetrating such frauds. In order to be useful for analysis purposes, it may be necessary to keep such messages for an extended retention period - months or perhaps years. A problem of the prior art is that the number of messages which are generated each retention period is far greater than the number of messages which can be stored for a reasonable cost.

### Summary of the Invention

The above problem is greatly alleviated and an advance is made over the prior art in accordance with this invention wherein a filtration system is used to control the recording of different SMS messages into ones of a plurality of subfiles of a storage system; each subfile contains a different type of message such as black list messages, ambiguous messages, white list messages, messages from a highly suspect source; for each subfile, a system administrator can control the percentage of messages to be stored in the subfile and the duration of time that these messages are to be stored. Advantageously, with this arrangement, the administrator or a telecommunications system can control the volume and category of stored messages.

In accordance with one feature of Applicants' invention, if, for a particular source, messages are analyzed to be mass delivered, then only a single copy is stored, along with an optional count of the number of such messages.

In accordance with another feature of Applicants' invention, different sub-directories can be stored in different types of memories so that those categories which have to be examined frequently, such as messages from highly suspect sources, are in a more accessible type of memory.

In accordance with another feature of Applicants' invention, different sub-directories can be accessed according to different access privileges. Examples of subfiles which would require special access are security sensitive subfiles, anti-spam analysis for self-training subfiles.

### Brief Description of the Drawing(s)

FIG. 1 is a block diagram illustrating the operation of Applicants' invention;
FIG. 2 is a flow diagram illustrating the operation of Applicants' invention;
FIG. 3 is a layout of a typical anti-spam storage file and its subfiles; and
FIG. 4 is a flow diagram illustrating the use of an Administrative System to control the operation of Applicants' invention.

### Detailed Description

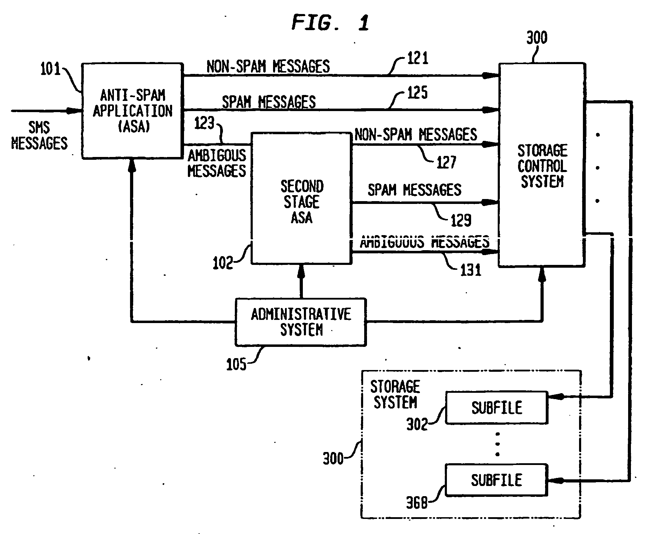

FIG. 1 is a block diagram illustrating the operation of Applicants' invention. SMS messages come to an anti-spam application 101, a software process running on an appropriate computer, whose purpose is to filter out spam messages. Examples of anti-spam applications are the MiLife SMS Anti-Spam Application available from Lucent Technologies Inc., and the Nexus NETVIEW Signaling Survey System. The output of the anti-spam application 101 includes non-spam messages 121; ambiguous messages 123 which cannot be identified as spam or non-spam messages in the first stage filtering, but can be forwarded to a second stage, anti-spam application 102, for deep analysis to determine whether they are good or spam messages; and spam messages 125. For messages 125 the anti-spam application 101 has a strong indication that it is a spam message and that the message should not be delivered to the destination. For example, messages 125 include messages from one of a black list of sources from which the destination does not wish to accept messages. Examples of non-spam messages 121 are messages whose source is on a white list of the destination as representing sources acceptable to the message destination. Ambiguous messages are messages whose source is neither on the white list nor on the black list but for which there are other indications that the message is not clearly a non-spam message. For example, when an Anti-Spam filter engine such as anti-spam application 101 does content or key word analysis and the result shows a spam severity index that is medium, then the message will be forwarded to the second stage for deep analysis; if the second stage analysis engine still cannot justify whether it is spam, it will treat such messages 131 as good messages to be delivered to the destination, or send such messages to an operator to manually check the spamness, and option to store in the storage system.

Messages 121, 125, 127, 129 and 131 are sent to storage control system 103 for storage in one of the subfiles (302,...,368) of the storage system 300. Both good and spam messages are stored, but different percentages and different retention intervals are generally assigned to these different messages.

An administrative system 105 is used to provide control information to the storage control system. The control information can be information such as the percentage of messages destined for a particular subfile which should be stored, the subfile destination of different categories of messages (e.g., messages from certain sources destined for a common subfile) and information to control the duration of storage of messages in each of the subfiles. Effectively, the administrative system controls the rules that the storage control system uses to decide which messages should be stored and to decide which subfile should be used for storing each such message.

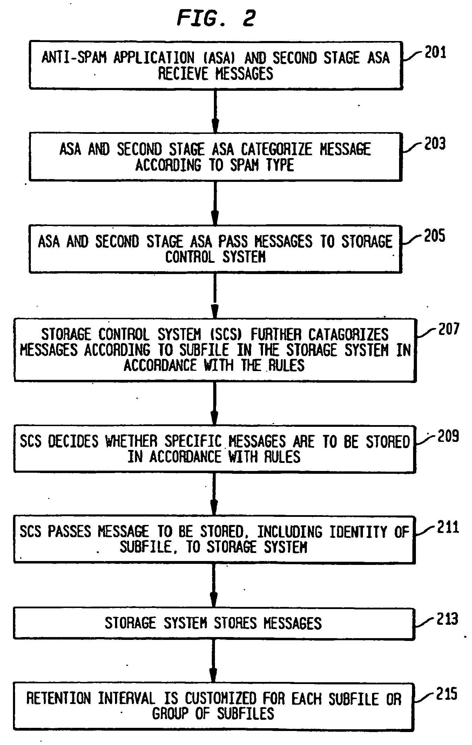

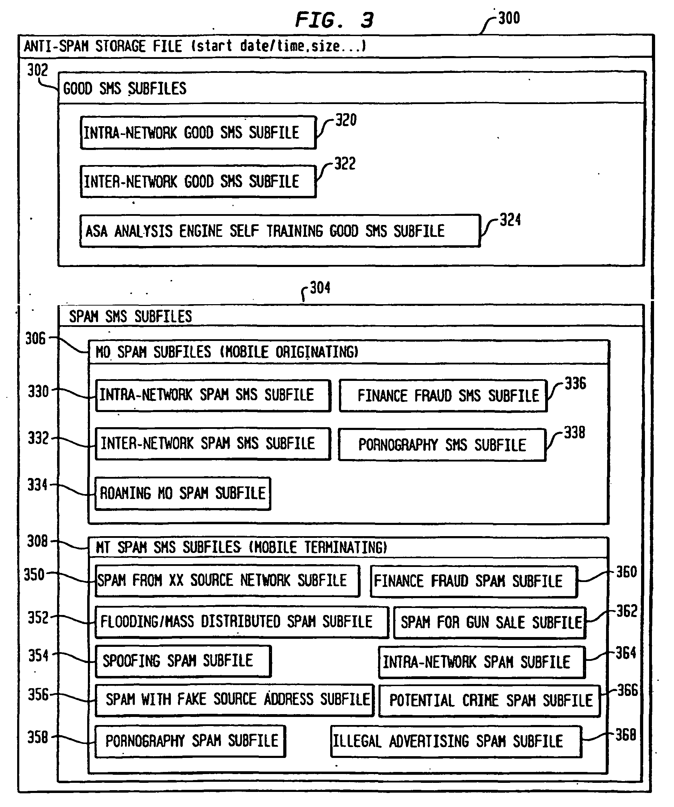

FIG. 2 is a flow diagram illustrating the operation of Applicants' invention. An anti-spam application (ASA) 101 and a second stage ASA 102 receive incoming SMS messages (action block 201). The ASA and second stage ASA categorize these messages according to spam type (action block 203). Major categories of messages are shown in FIG. 3.

The ASA and second stage ASA pass these categorized messages to the storage control system (SCS) (action block 205). The storage control system then further categorizes messages according to the subfile in storage system in accordance with the rules stored for the storage control system (action block 207). For example, the storage control system may have one category for messages from a particularly suspicious source. The advantage of this further categorization is that while ordinary spam messages may be saved only to the extent of, for example, 25%, these messages from highly suspicious sources may be saved 100%. Also, they are saved in a separate subfile to allow for special access from an administrative system for examining these messages. Special subfiles can be set up for individual ones of these suspicious sources. The further categorization carried out by the storage control system is performed in accordance with rules supplied by an administrative system.

The storage control system decides whether a specific message ought to be stored (action block 209). Since it would be impractical to store all messages, only a fraction of messages is stored. The fraction is a function of the particular subfile in which the messages are to be stored. The fractional allotment is carried out by either storing N out of every M messages for a fraction of N/M or by some process which randomizes the selection of the message to be stored. An example of a randomizing process is one which examines the last few digits of the clock and performs the storage or non-storage function in accordance with the reading of that clock.

The storage control system then passes messages to be stored including an identity of the subfile to the storage system (action block 211). The storage system then stores the passed messages (action block 213).

In accordance with one preferred embodiment of the invention, the retention interval is customized for each subfile or group of subfiles (action block 215).

FIG. 3 is a sample data layout showing a typical complete anti-spam storage file 300 including a set of good short message service (SMS) subfiles 302, a set of spam SMS subfiles including a set of mobile originating spam subfiles 306, and a set of mobile terminating spam SMS subfiles 308. Included in the good short message system subfiles are intra-network good SMS subfiles 320; inter-network good SMS subfiles 322 and subfiles used for self training purposes to help identify future good SMS subfiles 324.

The mobile originating spam subfiles include intra-network spam subfile 330, inter-network spam SMS subfile 332, roaming mobile origination spam subfiles 334, finance fraud SMS subfile 336, and pornography SMS subfiles 338. These subfiles are used to help identify originators of spam SMS subfiles.

Mobile terminating spam SMS subfiles include spam from identified source network subfiles 350, flooding or mass distributed spam subfiles 352, spoofing spam subfiles 354, spam subfiles with a fake source address 356, pornography spam subfiles 358; finance fraud spam subfiles 360, spam subfiles for gun sales 362, intra-network spam subfiles 364, potential crime spam subfiles 366, and illegal advertising spam subfiles 368. For each subfile, a count is maintained of the number of messages and the date and time of each entry. For each subfile, a tentative allotment of space has been initialized and the percentage fill of each subfile is maintained. For each subfile, a percentage of messages of the appropriate kind to be stored in the subfile is maintained; for many of the subfiles, especially the subfiles for fraudulent spam messages, the percent of messages to be stored is frequently 100%. For each subfile, a retention period is maintained so that the older messages are cleared to make room for new messages.

As can be seen from the example, some subfiles apply only to mobile terminating or to mobile originating traffic. In alternative layouts, the same subfile can be used for both directions of traffic. The subfile system can be customized to meet the needs of each telecommunications carrier or application.

Different subfiles can have different and/or a plurality of thresholds for notifying the administrative system that the subfile is sufficiently close to being full so as to require some action to delete messages or increase the size of the subfile.

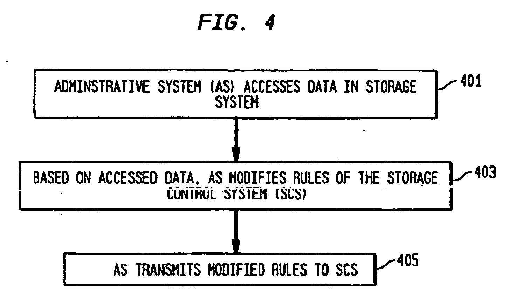

FIG. 4 is a flow diagram illustrating the operation ot the administrative system for controlling the storage of messages. The administrative system (AS) accesses data in the storage system (action block 401). The administrative system may access this data in order to ascertain the fill of each or any of the subfiles and/or to obtain specific data of messages stored in a subfile.

Based on the accessed data, the administrative system modifies the rules of the storage control system (action block 403). For example, if the administrative system finds that the fill of a non-spam subfile is relatively high, the administrative system may modify the rule for storing messages destined for that subfile to reduce the fraction that will be stored. For example, during a holiday season, many more non-spam greeting messages may be sent. The retention fraction would be lowered to accommodate this flurry of traffic.

The administrative system then transmits the modified rules to the storage control system (action block 405) which performs its function in accordance with the modified rules.

The staff of the administrative system can be given restrictive access to the contents of the storage system. For example, special passwords may be required to access the finance fraud subfile, to prevent an insider from warning a thief.

The above description is of one preferred embodiment of Applicants' invention. Other embodiments will be apparent to those of ordinary skill in the art. The invention is limited only by the attached claims.

## Claims

1. A system for anti-spam filtering and storing of short message service (SMS) messages, comprising:
means (101) for determining which SMS messages are unwanted type messages (spam), which messages are considered to be non-spam messages and can be delivered to a destination, and which messages are ambiguous, i.e., not categorizable into spam or non-spam messages;
**Characterized in that** said system further comprises:
a storage system (300) comprising a plurality of subfiles (302,...,368); and
means (300) for assigning each of said ambiguous messages into one of a plurality of categories in accordance with rules for assigning;
means (300) for storing each of said plurality of categories in one of said plurality of subfiles, in accordance with the rules (207, 211) for each subfile;
said rules comprising percentages of messages of each category that are to be stored in a subfile and the length of time that messages are to be stored in the subfile.

2. The apparatus of claim 1 further comprising means (105) for generating and transmitting administrative control messages to said means for assigning messages to establish rules to control which types of messages are to be stored in which subfiles.

3. The apparatus of claim 2 wherein said means for assigning comprises means for controlling storage of a fraction of messages assigned to a particular subfile in accordance with said rules.

4. The apparatus of claim 2 wherein said means for assigning further comprises means for associating with each subfile, a length of time for which messages in said subfile are to be retained in accordance with said rules.

5. A method for anti-spam filtering and storing of short message service (SMS) messages, comprising the steps or
determining (201, 203) which SMS messages are unwanted type messages (spam), which messages are considered to be non-spam messages and can be delivered to a destination, and which messages are ambiguous, i.e., not categorizable into spam or non-spam messages;
**Characterized in that** said method further comprises:
assigning (207) each of said ambiguous messages into one of a plurality of categories in accordance with rules for assigning;
storing each of said plurality of categories in one of a plurality of subfiles, in accordance with the rules (211, 213) for each subfile;
said rules comprising percentages of messages of each category that are to be stored in a subfile and the length of time (215) that messages are to be stored in the subfile.

6. The method of claim 5 further comprising the step of:
generating and transmitting administrative control messages (403, 405) to said storage system to establish rules to control which types of messages are to be stored in which subfiles.

7. The method of claim 6 wherein the step of assigning comprises the step of controlling storage of a fraction of messages assigned to a particular subfile in accordance with said rules.

8. The method of claim 7 wherein the step of assigning further comprises the step of associating with each subfile, a length of time for which messages in said subfile are to be retained in accordance with said rules.

## Patentansprüche

1. System zur Antispam-Filterung und zum Speichern von Kurznachrichtendienst- bzw. SMS-Nachrichten, umfassend:
Mittel (101) zum Bestimmen, welche SMS-Nachrichten unerwünschte Nachrichten (Spam) sind, welche Nachrichten als Nicht-Spam-Nachrichten zu betrachten sind und an ein Ziel zugestellt werden können, und welche Nachrichten zweideutig, d.h. nicht als Spam- oder Nicht-Spam-Nachrichten kategorisierbar sind;
**dadurch gekennzeichnet, dass** das besagte System weiterhin umfasst:
Ein Speichersystem (300) mit einer Vielzahl von Unterordnern (302, ..., 368); und
Mittel (300) zum Zuordnen einer jeden der besagten zweideutigen Nachrichten zu einer einer Vielzahl von Kategorien gemäß Zuordnungsregeln;
Mittel (300) zum Speichern einer jeden der besagten Vielzahl von Kategorien in einem der besagten Vielzahl von Unterordnern gemäß den Regeln (207, 211) für jeden Unterordner;
wobei die besagten Regeln Prozentsätze von Nachrichten einer jeden Kategorie, die in einem Unterordner zu speichern sind, sowie den Zeitraum, während welchem die Nachrichten in dem Unterordner zu speichern sind, umfassen.

2. Vorrichtung nach Anspruch 1, weiterhin umfassend Mittel (105) zum Erzeugen und Übertragen von verwaltungstechnischen Steuerungsnachrichten an die besagten Mittel zum Zuordnen von Nachrichten, um Regeln darüber zu erstellen, welche Arten von Nachrichten in welchen Unterordnern zu speichern sind.

3. Vorrichtung nach Anspruch 2, wobei die besagten Mittel zum Zuordnen Mittel zum Steuern der Speicherung von Bruchteilen von Nachrichten, die einem bestimmten Unterordner zugeordnet sind, gemäß den besagten Regeln umfassen.

4. Vorrichtung nach Anspruch 2, wobei die besagten Mittel zum Zuordnen weiterhin Mittel zum Assoziieren, gemäß den besagten Regeln, eines Zeitraums, während welchem Nachrichten in dem besagten Unterordner aufzubewahren sind, mit jedem Unterordner umfassen.

5. Verfahren zur Antispam-Filterung und zum Speichern von Kurznachrichtendienst- bzw. SMS-Nachrichten, die folgenden Schritte umfassend:
Bestimmen (201, 203), welche SMS-Nachrichten unerwünschte Nachrichten (Spam) sind, welche Nachrichten als Nicht-Spam-Nachrichten zu betrachten sind und an ein Ziel zugestellt werden können, und welche Nachrichten zweideutig, d.h. nicht als Spam- oder Nicht-Spam-Nachrichten kategorisierbar sind;
**dadurch gekennzeichnet, dass** das besagte Verfahren weiterhin umfasst:
Zuordnen (207) einer jeden der besagten zweideutigen Nachrichten zu einer einer Vielzahl von Kategorien gemäß Zuordnungsregeln;
Speichern einer jeden der besagten Vielzahl von Kategorien in einem einer Vielzahl von Unterordnern gemäß den Regeln (211, 213) für jeden Unterordner;
wobei die besagten Regeln Bruchteile von Nachrichten einer jeden Kategorie, die in einem Unterordner zu speichern sind, sowie den Zeitraum (215), während welchem Nachrichten in dem Unterordner zu speichern sind, umfassen.

6. Verfahren nach Anspruch 5, weiterhin den folgenden Schritt umfassend:
Erzeugen und Übertragen von verwaltungstechnischen Steuerungsnachrichten (403, 405) an das besagte Speichersystem, um Regeln darüber zu erstellen, welche Arten von Nachrichten in welchen Unterordnern zu speichern sind.

7. Verfahren nach Anspruch 6, wobei der besagte Schritt des Zuordnens den Schritt des Steuerns der Speicherung eines Bruchteils von Nachrichten, die einem bestimmten Unterordner zugeordnet sind, gemäß den besagten Regeln umfasst.

8. Verfahren nach Anspruch 7, wobei der besagte Schritt des Zuordnens weiterhin den Schritt des Assoziierens, gemäß den besagten Regeln, eines Zeitraums, während welchem Nachrichten in dem besagten Unterordner aufzubewahren sind, mit jedem Unterordner umfasst.

## Revendications

1. Système de filtrage et de stockage anti-pourriel de messages de service de messages courts (SMS), comprenant :
des moyens (101) pour déterminer quels messages SMS sont des messages de type indésirable (pourriels), quels messages sont considérés comme des messages propres et peuvent être délivrés à une destination, et quels messages sont ambigus, c'est-à-dire qu'il ne s'agit ni de pourriels ni de messages propres ;
**caractérisé en ce que** ledit système comprend en outre :
un système de stockage (300) comprenant une pluralité de sous-fichiers (302,...,368) ; et
des moyens (300) pour attribuer chacun desdits messages ambigus à une catégorie parmi une pluralité de catégories conformément à des règles d'attribution ;
des moyens (300) pour stocker chaque catégorie parmi ladite pluralité de catégories dans un sous-fichier parmi ladite pluralité de sous-fichiers, conformément aux règles (207, 211) pour chaque sous-fichier ;
lesdites règles comprenant des pourcentages de messages de chaque catégorie qui doivent être stockés dans un sous-fichier et la durée de stockage de ces messages dans le sous-fichier.

2. Appareil selon la revendication 1 comprenant en outre des moyens (105) pour générer des messages de contrôle administratif et pour les transmettre auxdits moyens d'attribution de messages afin d'établir des règles pour contrôler quels types de messages doivent être stockés dans quels sous-fichiers.

3. Appareil selon la revendication 2 dans lequel lesdits moyens d'attribution comprennent des moyens pour contrôler le stockage d'une fraction des messages attribués à un sous-fichier particulier conformément auxdites règles.

4. Appareil selon la revendication 2 dans lequel lesdits moyens d'attribution comprennent en outre des moyens pour associer à chaque sous-fichier une durée de conservation des messages dans ledit sous-fichier conformément auxdites règles.

5. Procédé de filtrage et de stockage anti-pourriel de messages de service de messages courts (SMS), comprenant les étapes suivantes :
déterminer (201, 203) quels messages SMS sont des messages de type indésirable (pourriels), quels messages sont considérés comme des messages propres et peuvent être délivrés à une destination, et quels messages sont ambigus, c'est-à-dire qu'il ne s'agit ni de pourriels ni de messages propres ;
**caractérisé en ce que** ledit procédé comprend en outre les étapes suivantes :
attribuer (207) chacun desdits messages ambigus à une catégorie parmi une pluralité de catégories conformément à des règles d'attribution ;
stocker chaque catégorie parmi ladite pluralité de catégories dans un sous-fichier parmi une pluralité de sous-fichiers, conformément aux règles (211, 213) pour chaque sous-fichier ;
lesdites règles comprenant des pourcentages de messages de chaque catégorie qui doivent être stockés dans un sous-fichier et la durée (215) de stockage de ces messages dans le sous-fichier.

6. Procédé selon la revendication 5 comprenant en outre l'étape suivante :
générer des messages de contrôle administratif (403, 405) et les transmettre audit système de stockage pour établir des règles pour contrôler quels types de messages doivent être stockés dans quels sous-fichiers.

7. Procédé selon la revendication 6 dans lequel l'étape d'attribution comprend l'étape de contrôle du stockage d'une fraction des messages attribués à un sous-fichier particulier conformément auxdites règles.

8. Procédé selon la revendication 7 dans lequel l'étape d'attribution comprend en outre l'étape d'association à chaque sous-fichier d'une durée de conservation des messages dans ledit sous-fichier conformément auxdites règles.
